# EUROPEAN PATENT SPECIFICATION

(11) **EP 2 770 770 B1**
(45) Date of publication and mention of the grant of the patent: **27.03.2019**
(21) Application number: 11865383.1
(22) Date of filing: 30.12.2011
(51) Int. Cl.: H04W 24/10, H04W 72/04, H04L 5/00

(54) **INTERFERENCE MEASUREMENT SIGNALLING NOTIFICATION, INTERFERENCE MEASUREMENT AND FEEDBACK METHOD AND DEVICE THEREOF**
SIGNALBENACHRICHTIGUNG ÜBER INTERFERENZMESSUNGEN, INTERFERENZMESS- UND RÜCKMELDUNGSVERFAHREN SOWIE VORRICHTUNG DAFÜR
PROCÉDÉ DE NOTIFICATION DE SIGNAUX DE MESURE D'INTERFÉRENCES, DE MESURE D'INTERFÉRENCES ET DE RÉTROACTION ET DISPOSITIF ASSOCIÉ

(30) Priority: 30.09.2011 CN 201110301608
(43) Date of publication of application: 27.08.2014
(73) Proprietor: ZTE Corporation, Shenzhen, Guangdong 518057 (CN)
(72) Inventor: LI, YuNgok, Shenzhen Guangdong 518057 (CN); CHEN, Yijian, Shenzhen Guangdong 518057 (CN); GUO, Senbao, Shenzhen Guangdong 518057 (CN); TANG, Hong, Shenzhen Guangdong 518057 (CN)
(74) Representative: Protector IP AS
(86) International application number: PCT/CN2011/085049
(87) International publication number: WO 2012/152045

(56) References cited:
- WO-A2-2011/010863
- CN-A- 101 064 529
- CN-A- 101 960 749
- CN-A- 102 149 124
- CN-A- 102 149 124
- CN-A- 102 201 879
- HUAWEI ET AL: "Working assumption for aperiodic CSI reporting", 3GPP DRAFT; R1-110627, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei, Taiwan; 20110221, 17 February 2011 (2011-02-17), XP050490735, [retrieved on 2011-02-17]
- LG ELECTRONICS: "Details of CSI Reporting in Time-domain eICIC", 3GPP DRAFT; R1-110381 DETAILS OF CSI REPORTING IN TIME-DOMAIN EICIC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117 - 20110121, 31 January 2011 (2011-01-31), XP050599056, [retrieved on 2011-01-31]

## Description

### TECHNICAL FIELD

The present disclosure relates to interference measurement technology, and in particular to a method and a device for notifying an interference measurement signaling, to a method and a device for measuring interference, and to a method and device for feeding back channel quality information.

### BACKGROUND

In a Long Term Evolution (LTE) system, Channel State Information (CSI) for indicating a downlink physical channel mainly includes the following three parameters: a Channel Quality Indication (CQI), a Pre-coding Matrix Indicator (PMI) and a Rank Indicator (RI).

Specifically, the CQI is an indicator for measuring the quality of a downlink channel. In the 3GPP TS 36.213 protocol, a CQI index is indicated by integer values 0 to 15 which represent different CQI levels, respectively. And each CQI level corresponds to a respective Modulation and Coding Scheme (MCS). Therefore, there are 16 conditions which may be indicated by 4-bit information. The corresponding relation between the CQI index and the MCS is as shown in Table 1 below.

**Table 1**

| CQI Index | Modulation Scheme | Code rate x 1024 | Efficiency |
|---|---|---|---|
| 0 | exceeding | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

In a LTE system, the significance for feeding back CQI lies in that a proper modulation and coding level for a transmission block may be selected by a User Equipment (UE) and recommended to a base station according to a channel quality so that the base station performs modulation and coding according to the recommended information, to maximize the transmission capability of its channels.

From another perspective, the CQI may be construed as quantization of channel quality information, if a channel has a good channel quality, it may support a high-order modulation and coding scheme and acquire higher transmission rate. If the channel has a bad channel quality, it may perform data transmission in a low-order modulation and coding scheme to ensure robustness of the transmission performance.

In the prior art, there are established algorithms for calculating RI, PMI and CQI, such as selecting the optimal RI, PMI and CQI by using a maximum capacity criterion. Generally, RI/PMI/CQI is not selected independently but selected uniformly. The accuracy of PI/PMI/CQI calculation and selection is affected by two factors: channel measurement and interference noise measurement.

Channel measurement may be implemented by measuring Common Reference Signals (CRS) or Channel State Information-Reference Signals (CSI-RS) in a LTE/LTE-A system. Currently, channels may be measured accurately by CRS or CSI-RS due to a superior reference signal design.

However, interference noise measurement is a bottleneck, and incorrect interference information may result in a mismatch between number of layers and practical channel quality state, for example, a channel can actually support only two layers, but it is misjudged that it can support four layers due to a measurement error of the interference noise information, if the above incorrect information is fed back to a base station, a very high bit error rate of the transmission data may be resulted in. Or, the channel can actually support a low-order modulation and coding scheme but it is misjudged that it can support a high-order modulation and coding scheme, and therefore a too high bit error rate may also be resulted in. Conversely, it may be possible that the channel can support multiple layers and a high-order modulation and coding scheme but actually less layers and a lower-order coding scheme are used for transmitting, thus resulting in a waste of transmission resources.

Noise measurement is relatively simple, because noise is generally resulted from a device itself. While interference is mainly from other cells or other nodes, and because the other cells or nodes may use different transmission techniques, such as different pre-codings, or have different transmitted signals, a change in interference may be resulted in. Therefore, noise measurement is the main problem currently facing.

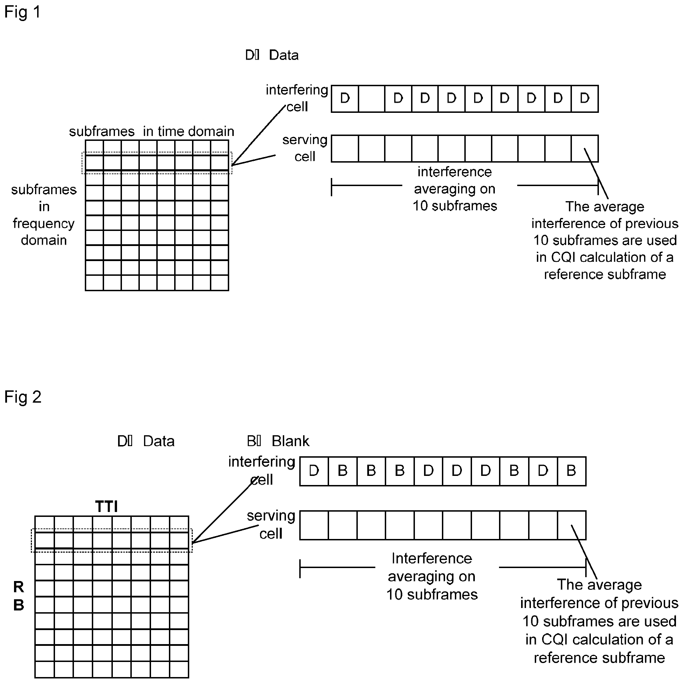

Fig. 1 shows a schematic diagram illustrating an averaging process on interference in successive M TTIs. As shown in Fig. 1, there are various kinds of existing methods for measuring interference, and a terminal may use any one of them without being restricted by protocols. A commonly-used algorithm for measuring interference is as follows: performing an averaging process on interference in a previous M Transmission Timing Intervals (TTI), acquiring an average interference, and calculating the CQI by assuming that it is affected by the average interference when the CQI is calculated.

However, for a terminal, it is not clear whether there is data transmission in an interfering cell, the current data scheduling conditions of the interfering cell may only be determined in the case that the base station is at a centralized scheduling. Fig. 2 shows a schematic diagram of channel quality mismatching the reality during transmission. As shown in Fig. 2, if there is currently no data scheduling, but the interference measurement of the terminal is still performing statistical averaging determination, misjudgment of RI and CQI may be resulted in, the measured channel quality may mismatch the practical channel quality when transmitting data, and number of transmission layers and modulation and coding may mismatch the channel quality, resulting in great performance loss.

In existing protocols, a base station does not control interference measurement of a terminal. Therefore, the base station does not determine how many subframes the terminal uses to perform averaging process. The value of M may be any integer. Therefore, the base station cannot perform a targeted adjustment according to information reported by a UE.

HUAWEI ET AL: "Working assumption for aperiodic CSI reporting", 3GPP DRAFT; R1-110627 discloses that the triggering grant can be in any downlink subframe with the explicit indication to inform the UE which subset is triggered for aperiodic report.

CN 102 149 124 A discloses that the configuration information of each set of REs for interference measurement shall include a periodicity, an sub-frame offset, etc., in addition to the locations, the number and the number of groups, of REs. Periodicities and offsets of different sets of REs for interference measurement may be the same or different, and if the periodicities and the offsets are the same, then the different sets of REs for interference measurement are located differently in a sub-frame; a set of REs for interference measurement may be present in a plurality of sub-frames in a period, that is, there may be a plurality of sub-frame offsets; and sets of REs for interference measurement in different sub-frames in a period may be located identically or differently. The first apparatus transmits configuration information of the obtained at least two sets of REs for interference measurement to the user equipment so that the user equipment performs interference measurement according to the obtained at least two sets of REs for interference measurement.

WO 2011/010863 A2 discloses that the UE may receive information about a transmission period and offset of channel state information by higher-layer signaling (Radio Resource Control (RRC) signaling).FIG. 1 illustrates a method for transmitting channel information at a UE, when a transmission period and offset of channel state information is 5 and 1, respectively. Referring to FIG. 1, if the transmission period of channel state information is 5, the UE transmits channel state information in every 5 subframes. For a transmission offset of 1, the transmission of the channel state information starts in the first subframe counted from subframe 0 in an ascending order of subframe indexes, that is, in subframe 1. Thus, the UE transmits the channel state information on a PUCCH in subframes 1 and 6. Specifically, the UE transmits an average CQI of subframes 1 to 5 or the CQI of any of subframes 1 to 5 in subframe 6. Or the UE may transmit an average CQI of an arbitrary period selected from subframes 1 to 5.

LG ELECTRONICS: "Details of CSI Reporting in Time-domain eICIC", 3GPP DRAFT; R1-110381 DETAILS OF CSI REPORTING IN TIMEDOMAIN EICIC discloses that CSI (CQI,PMI,RI) feedback based on interference measurement in restricted subsets of subframes is enabled through configured subsets of subframes indicated by CSI measurement subframe configuration
- Subframe subsets are signalled by RRC (e.g. with bitmaps of size matching the size of almost blank subframe pattern)
   0 or 2 subframe subsets can be configured per UE
   - Baseline is that the UE only reports CSI for each configured subframe subset.

### SUMMARY

In view of the above, the present disclosure provides a method and a device for notifying an interference measurement signaling, a method and a device for measuring interference, and a method and device for feeding back channel quality information, capable of solving the problem that interference information of subframes may not be accurately provided to a base station.

The features of the method, base station and terminal according to the present invention are defined in the independent claims, and the preferable features according to the present invention are defined in the dependent claims.

In the present disclosure, a base station notifies CSI information to be measured to a terminal, the terminal performs interference measurement according to an instruction of the base station, and feeds back the measurement result to the base station in time, accordingly, the base station can accurately determine a modulation and coding scheme of the terminal according to the interference measurement result, thus improving data transmission efficiency.

### BRIEF DESCRIPTION OF THE DRAWINGS

Fig. 1 shows a schematic diagram illustrating an averaging process on interference in successive M TTIs;
Fig. 2 shows a schematic diagram of channel quality mismatching the reality during transmission;
Fig. 3 shows a structure diagram of a device for notifying an interference measurement signaling according to an embodiment of the present disclosure;
Fig. 4 shows a structure diagram of a device for measuring interference according to an embodiment of the present disclosure;
Fig. 5 shows a structure diagram of a device for feeding back channel quality information according to an embodiment of the present disclosure; and
Fig. 6 shows another structure diagram of a device for feeding back channel quality information according to an embodiment of the present disclosure.

### DETAILED DESCRIPTION

A base station notifies CSI information to be measured to a terminal, the terminal performs interference measurement according to an instruction of the base station, and feeds back the measurement result to the base station in time. Accordingly, the base station can accurately determine a modulation and coding scheme of the terminal according to the interference measurement result, thus improving data transmission efficiency.

In order to make the objects, technical solutions and advantages of the present disclosure better understood, the present disclosure will be further explained in detail below by illustrating embodiments with reference to the drawings.

### First Embodiment

This embodiment describes how a base station uses a signaling to notify information of M successive subframes included in an interference measurement subframe set or a channel quality measurement subframe set to a UE.

As shown in Table 2 below, eight M values can be indicated by 3 status bits.

**Table 2**

| | |
|---|---|
| 000 | 1 subframe |
| 001 | 5 subframes |
| 010 | 10 subframes |
| 011 | 20 subframes |
| 100 | 40 subframes |
| 101 | 80 subframes |
| 110 | 160 subframes |
| 111 | 320 subframes |

As shown in Table 3, four M values can be indicated by 2 status bits.

**Table 3**

| | |
|---|---|
| 00 | 1 subframe |
| 01 | 10 subframes |
| 10 | 100 subframes |
| 11 | 1000 subframes |

In the present disclosure, the method for indicating M successive subframes included in an interference measurement subframe set or a channel quality measurement subframe set are not limited to those shown in Table 2 and Table 3. Number of bits indicating M values is not limited to 2 or 3, and can be set as required.

Once the corresponding relations in Table 2 and Table 3 are determined, they will be notified to a terminal or configured in the terminal beforehand.

### Second Embodiment

This embodiment describes the following two conditions: a signaling carrying the information of the above M successive subframes is transmitted in a Radio Resource Control (RRC) layer or in a physical layer.

A RRC signaling belongs to a high layer signaling, a base station may carry the 2-bit or 3-bit information described in the first embodiment and other bit information indicating an M value in a RRC layer signaling, and notify these information to a UE. The RRC layer signaling may be maintained for a long time after coming into effect, the M successive subframes included in an interference measurement subframe set or a channel quality measurement subframe set will be determined according to the M information previously notified before the RRC signaling is changed.

A base station may also notify the M information to a UE by a physical layer signaling. For example, the M information together with a triggered signaling for triggering an aperiodic CSI feedback are carried in a Downlink Control Information (DCI) Format 0 or a DCI Format 4 defined by a LTE/LTE-A protocol.

M information binded together with triggered information of an aperiodic CSI feedback are transmitted. In addition, the M information is valid only for the aperiodic CSI feedback currently triggered.

For example, a base station triggers an aperiodic CSI feedback, and needs to report the CQI and to notify that M=10. For the current RI/PMI/CQI calculation, the UE determines an interference measurement subframe set according to M=10, measures an average interference, and the average interference information is applied to the RI/PMI/CQI calculation of the current feedback.

### Third Embodiment

This embodiment describes a method for measuring interference of a UE.

A terminal acquires M information by receiving a high layer signaling or a physical layer signaling, further determining M successive subframes included in an interference measurement subframe set or a channel quality measurement subframe set.

A terminal may perform interference measurement according to Common Reference Resource (CRS), i.e., the interference on the measured CRS may be acquired by subtracting the evaluated reference signal signal from the received signal on the CRS. Taking M=10 as an example, it is assumed that interference of 10 subframes are 11, I2...I10 respectively, the UE may assume that interference of the subframes currently measured is arithmetic average interference: I=(I1+I2+...+I10)/10

It may also be weighted average interference, such as I=(a1×I1+a2×I2+...+a10×I10)/(a1+a2+...+a10).

A terminal may perform interference measurement according to a CSI-RS (a channel quality measurement reference signal defined in the LTE protocol), and an interfering channel H is measured by the CSI-RS. M=1 is taken as an example and illustrated as below.

An interfering channel H from an interfering cell to a terminal is measured by the terminal, and interference calculation is performed according to the interfering channel H, an assumed interference and coding vector.

For example, it is assumed that the interference and coding vector is w, which is a codeword of a codebook defined in LTE, then a correlation matrix Rnn of the interference is acquired as Hwxw'H', wherein ' stands for conjugate transpose. It is also possible that correlation matrix Rnn=(Hw1×w1'H'+Hw2×w2'H'+...+Hwn×wn'H')/n, wherein w1, w2...wn are codewords of a codebook defined in LTE, and the codeword is different from each other.

Alternatively, a terminal may perform interference measurement on one or more subframes specified by a base station, determine a CQI according to the measurement result and feed back the CQI to the base station. The measurement method and feeding back method are the same as those described above.

Specifically, the base station carries the subframe offset indication or the subframe number and the subframe offset indication in a high layer signaling or a physical layer signaling, and notifies them to the terminal. The physical signaling and a signaling for triggering an aperiodic Channel State Information (CSI) report are carried in the same Format of a Physical Downlink Control Channel (PDCCH), and sent to the terminal.

The terminal receives the subframe number and the subframe offset indication sent by the base station, and determines the specified subframes as one or more subframes corresponding to the difference between a reference subframe number of a channel measurement and a subframe offset.

Alternatively, the terminal receives the subframe number and the subframe offset indication sent by the base station, and determines the specified subframes as subframes corresponding to the difference between a reference subframe number of a channel measurement and one or more subframe offsets.

### Fourth Embodiment

A base station may adjust CSI according to received measurement result, and mainly adjusts a CQI. The CQI is taken as an example and illustrated as below.

The CQI fed back by a UE stands for a modulation and coding scheme of a transmission, and is also regarded as Signal to Interference plus Noise Ratio (SINR) information. SINR1=S/(I+N), wherein S is signal information, N is noise power and other interference, and I is adjacent cell interference information.

Taking the case as an example, where M, the number of successive subframes included in a subframe set, is 10 and adjacent cell interference exists in 5 subframes out of the 10 previously scheduled subframes, the base station considers that the calculation of SINR1 fed back by a terminal performs averaging on 10 subframes, while the base station determines according to its own scheduling information that 5 subframes out of the 10 subframes are not affected by adjacent cell interference. Accordingly, if adjacent cell interference exists in subframes to be scheduled currently, the base station determines that the adjacent interference (I) value used when the SINR1 is calculated and reported by a UE tends to be smaller. Therefore, the base station needs to adjust SINR2 of subframes to be adjusted where adjacent interference currently exist in based on the SNR1, specifically, SINR2=S/(2I+N). Here, the base station is required to acquire ratio information between I and N to determine the I value to be adjusted and thus adjust SINR of the subframes to be scheduled currently, wherein the ratio information may be evaluated by the base station or reported by the UE.

If there is no interference in subframes to be scheduled, the base station determines that the adjacent interference (I) value used when the SINR1 is calculated and reported by a UE tends to be greater. Therefore, the base station needs to adjust SINR3 of subframes to be scheduled currently, specifically, SINR3=S/N. Here, the base station requires to acquire ratio information between I and N to adjust SINR3, wherein the ratio information may be evaluated through multiple measurement and calculation by the base station or reported by the UE.

### Fifth Embodiment

This embodiment mainly describes a method for feeding back channel quality information. The example mainly includes: performing, by the terminal, interference measurement on the specified interfering channel by using one or more subframes including CRI-RS or zero power CRI-RS of a specific frame or prior to the specific frame, measuring interference of other interfering channels when the interference of the specified interfering channel is zero, and feeding back the two measurement results to the base station.

A base station triggers an aperiodic CSI feedback by a signaling, and specifies a UE to measure channel information on a subframe n and to measure first cell interference information on all or a part of resource positions of the subframe n or one or more subframes prior to n. The subframe n is a subframe corresponding to a time when a base station triggered signaling is transmitted.

A base station may determine subframes to be measured previously by the subframe n and the corresponding offset. For example, when offset information is carried by the subframe n, it is determined by a terminal that interference measurement of specified interfering channels will be performed on subframes corresponding to n minus the offset (when there are multiple specified subframes, the base station will notify multiple offsets, which are non-negative integer values). The subframes specified by the base station are all subframes including CSI-RS or zero power CSI-RS.

However, when the base station does not specify subframes to be measured, the terminal will perform interference measurement of specified interfering channels on reference signal positions of subframes including CSI-RS or zero power CSI-RS of the subframe n and subframes prior to n, then first interference measurement result is acquired, and a first CSI for quantifying CSI information is calculated according to the channel measurement result, the first interference measurement result, interference measurement results of other interfering channels, noise and the like.

In the present disclosure, the CSI information includes one or more parameters of RI, PMI and CQI.

Wherein zero CSI-RS are vacant positions in a cell, these positions are for other calls (interfering cell) to transmit reference signal, accordingly, interference information of other cells may be measured on these positions.

In this example, the terminal further measures interference of other interfering channels of other interfering sources besides the interfering channels specified by the base station. A second CSI for quantifying CSI information is calculated by only considering the interference measurement result and noise of other interfering channels combined with the specified channel measurement result.

The terminal will feed back the calculated first CSI and the second CSI on data channels of the specified uplink subframes.

A base station may determine the effect of the interference of the specified interfering channels and the interference of other interfering channels on interference of a terminal serving cell, so as to determine whether some interfering sources should be closed to ensure service quality of the terminal serving cell.

### Sixth Embodiment

This embodiment mainly describes a method for feeding back channel quality information.

A base station triggers an aperiodic CSI feedback by a signaling, and carries the triggered information in a DCI Format, and specifies a UE to measure channel information on a subframe n according to the position of the DCI Format and pre-defined regulations.

Moreover, the base station notifies the UE to measure interference of specified subframes m_1, m_2, ..., m_p respectively, specifically, to measure information of first interference, second interference, ..., pth interference of resource sets REset_1, REset_2, ..., REset_p on all or a part of resource positions of the subframes m_1, m_2, ..., m_p. Wherein the subframe n is determined according to a time for transmitting a base station triggered signaling.

The subframes m_1, m_2, ..., m_p may be determined, by the base station, by specifying offsets between the subframe n and a subframe m through a signaling, such as m_1=n-offset_1, m_2=n-offset_2, ..., m_p=n-offset_p, wherein offset_1, offset_2, ..., offset_p are non-negative integers.

CSI information for quantifying is calculated according to the information of the first interference, the second interference, ..., the pth interference of respective specified subframes and the noise of respective specified subframes above, and is notified to the base station.

The base station may select conditions with the same CSI of the specified subframes aforementioned according to the interference conditions of the subframes to be scheduled currently, thus determining a modulation and coding scheme of a terminal.

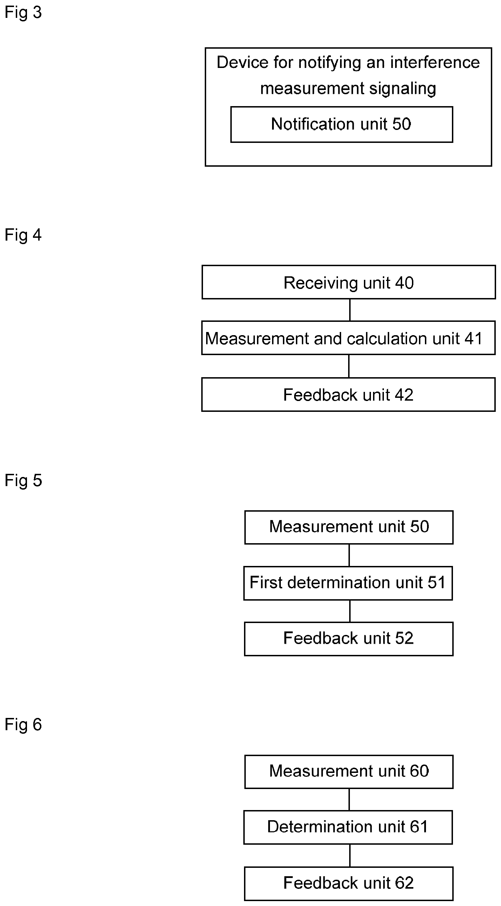

Fig. 3 shows a structure diagram of a device for notifying an interference measurement signaling according to embodiments of the present disclosure. As shown in Fig. 3, the device for notifying an interference measurement signaling according to embodiments of the present disclosure includes:
a notification unit 30 configured to notify information of M subframes included in an interference measurement subframe set or a channel quality measurement subframe set to a terminal.

The notification unit 30 is further configured to carry the M in a high layer signaling or a physical layer signaling and to notify the terminal.

The physical signaling and a signaling for triggering an aperiodic Channel State Information (CSI) report are carried in the same Format of a Physical Downlink Control Channel (PDCCH), and sent to the terminal.

It should be appreciated by those skilled in the art that the device for notifying an interference measurement signaling shown in Fig. 3 is designed for implementing the aforementioned method for notifying an interference measurement signaling, functions of the notification unit 30 in the device for notifying an interference measurement signaling shown in Fig. 3 can be understood with reference to the description of the aforementioned method, and the functions of the processing unit can be implemented by programs operated on a processor, or can also be implemented by a specific logic circuit.

Fig. 4 shows a structure diagram of a device for measuring interference according to embodiments of the present disclosure. As shown in Fig. 4, the device for measuring interference according to embodiments of the present disclosure includes a receiving unit 40, a measurement and calculation unit 41 and a feedback unit 42, wherein
the receiving unit 40 is configured to receive a notification of information of M subframes included in an interference measurement subframe set or a channel quality measurement subframe set sent by a network side;
the measurement and calculation unit 41 is configured to perform interference measurement on each of the M subframes and to calculate an average interference value; and
the feedback unit 42 is configured to determine CQI information and to feed back to a base station.

Based on the device for measuring interference shown in Fig. 4, the device for measuring interference according to embodiment of the present disclosure further includes:
an adjustment unit (not shown in Fig. 4), located in a base station, configured to adjust a current modulation and coding scheme according to the CQI fed back by the feedback unit and scheduling information in a period of time corresponding to the interference measurement subframe set or the channel quality measurement subframe set.

It should be appreciated by those skilled in the art that the device for measuring interference shown in Fig. 4 is designed for implementing the aforementioned method for measuring interference, functions of each unit in the device for measuring interference shown in Fig. 4 can be understood with reference to the description of the aforementioned method, and the functions of each processing unit can be implemented by programs operated on a processor, or can also be implemented by a specific logic circuit.

Fig. 5 shows a structure diagram of a device for feeding back channel quality information according to embodiments of the present disclosure. As shown in Fig. 5, the device for feeding back channel quality information according to embodiments of the present disclosure includes a measurement unit 50, a first determination unit 51 and a feedback unit 52, wherein
the measurement unit 50 is configured to perform interference measurement on a subframe specified by a base station;
the first determination unit 51 is configured to determine a CQI according to the measurement result of the measurement unit; and
the feedback unit 52 is configured to feed back the CQI to the base station.

Based on the device for feeding back channel quality information shown in Fig. 5, the device for feeding back channel quality information according to embodiments of the present disclosure further includes a receiving unit (not shown in Fig. 5) and a second determination unit (not shown in Fig. 5), wherein
the receiving unit is configured to receive a subframe offset indication or a subframe number and the subframe offset indication sent by the base station;
the second determination unit is configured to determine the specified subframe as a subframe corresponding to the difference between a current subframe number and a subframe offset according to the subframe offset indication sent by the base station and received by the receiving unit; or
the second determination unit is configured to determine the specified subframe as a subframe corresponding to the difference between the subframe number and a subframe offset according to the subframe number and the subframe offset indication sent by the base station and received by the receiving unit.

It should be appreciated by those skilled in the art that the device for feeding back channel quality information shown in Fig. 5 is designed for implementing the aforementioned method for feeding back channel quality information, functions of each processing unit in the device for feeding back channel quality information shown in Fig. 5 can be understood with reference to the description of the aforementioned sixth embodiment, and the functions of each processing unit can be implemented by programs operated on a processor, or can also be implemented by a specific logic circuit.

Fig. 6 shows another structure diagram of a device for feeding back channel quality information according to embodiments of the present disclosure. As shown in Fig. 6, the device for feeding back channel quality information according to embodiments of the present disclosure includes a measurement unit 60, a determination unit 61 and a feedback unit 62, wherein
the measurement unit 60 is configured to perform a specified interfering channel measurement on a part of resource positions on a subframe specified by a base station; and, to eliminate interference on the specified interfering channel and to measure interference from other interfering channels;
the determination unit 61 is configured to determine a first CQI according to the measurement result of the interfering channel measurement on a part of resource positions on a specified subframe and measurement results of other interference and noise; to eliminate interference on the specified interfering channel and to determine a second CQI according to measurement results of interference and noise from other interfering channels; and
the feedback unit 62 is configured to feed back the first CQI and the second CQI to the base station.

The measurement unit 60 is further configured to perform interference measurement on an interfering channel by using reference signal positions on one or more subframes including CRI-RS or zero power CRI-RS of a specific frame or prior to the specific frame, and to measure interference of other interfering channels when the interference of the specified interfering channel is zero, wherein the specific frame is a subframe corresponding to a time when the base station triggered measurement signaling is transmitted.

It should be appreciated by those skilled in the art that the device for feeding back channel quality information shown in Fig. 6 is designed for implementing the aforementioned method for feeding back channel quality information, functions of each processing unit in the device for feeding back channel quality information shown in Fig. 6 can be understood with reference to the description of the aforementioned fifth embodiment, and the functions of each processing unit can be implemented by programs operated on a processor, or can also be implemented by a specific logic circuit.

The above descriptions are merely the preferred embodiments of the present disclosure, and are not intended to limit the scope of protection of the claims of the present disclosure.

## Claims

1. A method for notifying an interference measurement signaling, wherein the method is performed by a base station and comprises:
notifying a terminal of information including an integer number M, wherein M is the number of successive subframes which are included in a specific interference measurement subframe set and over which the terminal is to perform interference measurement averaging in order to determine a Channel State Information, CSI, wherein the specific interference measurement subframe set is a set of subframes for which the base station includes Zero Power CSI Reference signals over which the terminal is to perform interference measurements; and
receiving from the terminal a CSI for the interference measurement subframe set the CSI resulting from the interference measurement averaging.

2. The method according to claim 1, wherein the step of notifying comprises:
carrying the M in a high layer signaling or in a physical layer signaling, and sending the signaling to the terminal.

3. The method according to claim 2, wherein the physical layer signaling and a signaling for triggering an aperiodic CSI report are carried in the same Format of a Physical Downlink Control Channel, PDCCH, and sent together to the terminal.

4. The method according to claim 3, further comprising:
adjusting a current modulation and coding scheme for data transmissions from the base station to the terminal, wherein the adjusting step is performed according to the CSI received from the terminal and according to scheduling information about an interfering cell or an interfering node, the scheduling information being the number of subframes carrying data transmissions from the interfering cell or from the interfering node among the subframes used by the terminal to determine the received CSI.

5. A method for measuring interference, the method being performed by a terminal and comprising:
receiving, from a base station, a notification of information including an integer number M, wherein M is the number of successive subframes which are included in a specific interference measurement subframe set and over which the terminal is to perform interference measurement averaging in order to determine a Channel State Information, CSI, wherein the specific interference measurement subframe set is a set of subframes for which the base station includes Zero Power CSI Reference signals over which the terminal is to perform interference measurements;
determining, based on the received information, M subframes of the interference measurement subframe set and
performing an interference measurement on each of the M determined subframes and calculating an average interference value of the interference measurement over the M determined subframes; and
determining a CSI according to the average interference value, and feeding the CSI back to the base station.

6. The method according to claim 5, wherein the M is received in a high layer signaling or in a physical layer signaling from the base station.

7. The method according to claim 6, wherein the physical signaling and a signaling for triggering an aperiodic CSI report are carried in the same Format of a Physical Downlink Control Channel, PDCCH, and received together from the base station.

8. A base station comprising means adapted to perform the method of any of claims 1 to 4.

9. A terminal comprising means adapted to perform the method of any of claims 5 to 7.

10. A method for feeding back channel state information, CSI, wherein the method is performed by a terminal and comprises:
performing, upon receiving from a base station a trigger for aperiodic CSI report, interference measurements on one or more subframes specified by said base station, and determining a Channel State Information, CSI, according to the measurement results, and feeding back the CSI to the base station, wherein the interference measurements are measurements performed over Zero Power CSI Reference Signals from the base station, wherein the specified subframes are subframes for which the base station includes said Zero Power CSI Reference signals, said method being **characterized in that** the terminal is informed of the one or more specified subframes by:
receiving, from the base station, a subframe offset indication for each of the one or more subframes, and determining each of the specified subframes as the subframe with a subframe number according to the difference between a reference subframe number of a channel measurement and a subframe offset indicated by a corresponding one of the subframe offset indications; wherein the reference subframe number of a channel measurement is a subframe corresponding to a time when said trigger is transmitted; or
receiving, from the base station, a subframe offset indication for each of the one or more subframes and a subframe number indication common to the one or more subframes, and determining each of the specified subframes as the subframe with a subframe number according to the difference between a reference subframe number indicated by the subframe number indication and a subframe offset indicated by a corresponding one of the subframe offset indications.

11. The method according to claim 10, further comprising:
receiving the subframe offset indications or the subframe number and the subframe offset indications in a high layer signaling or in a physical layer signaling from the base station.

12. The method according to claim 11, wherein the physical signaling and a signaling for triggering said aperiodic CSI report are carried in the same Format of a Physical Downlink Control Channel, PDCCH, and received together from the base station.

13. A terminal comprising means adapted to perform the method of any of claims 10 to 12.

## Patentansprüche

1. Verfahren zur Benachrichtigung einer Interferenzmessungsmeldung, wobei das Verfahren von einer Basisstation durchgeführt wird und Folgendes umfasst:
Benachrichtigen eines Endgeräts über Informationen, umfassend eine ganze Zahl M, wobei M die Anzahl aufeinanderfolgender Teilrahmen ist, die in einem bestimmten Interferenzmessungs-Teilrahmensatz enthalten sind, und
über die das Endgerät eine Interferenzmessungsmittelwertbildung durchführen soll, um eine Kanalzustandsinformation, CSI, zu bestimmen,
wobei der bestimmte Interferenzmessungs-Teilrahmensatz ein Satz von Teilrahmen ist, für die die Basisstation Nullleistungs-CSI-Referenzsignale einschließt, über die das Endgerät Interferenzmessungen durchführen soll; und
Empfangen, von dem Endgerät, einer aus der Interferenzmessungsmittelwertbildung resultierenden CSI für den Interferenzmessungs-Teilrahmensatz.

2. Verfahren nach Anspruch 1, wobei der Schritt des Benachrichtigens Folgendes umfasst:
Transportieren des M in einer Hochschicht-Meldung oder in einer physikalischen Schicht-Meldung und Senden der Signalisierung an das Endgerät.

3. Verfahren nach Anspruch 2, wobei die Meldung der physikalischen Schicht und eine Meldung zum Auslösen eines aperiodischen CSI-Berichts im gleichen Format eines physikalischen Downlink-Steuerung-Kanals, PDCCH, transportiert und zusammen an das Endgerät gesendet werden.

4. Verfahren nach Anspruch 3, ferner umfassend:
Einstellen eines aktuellen Modulations- und Kodierungsschemas für Datenübertragungen von der Basisstation zum Endgerät, wobei der Einstellschritt gemäß der von dem Endgerät empfangenen CSI und gemäß Planungsinformationen über eine Interferenzzelle oder einen Interferenzknoten durchgeführt wird, wobei die Planungsinformationen die Anzahl von Teilrahmen sind, die, unter den von dem Endgerät zum Bestimmen der empfangenen CSI verwendeten Teilrahmen, Datenübertragungen von der Interferenzzelle oder dem Interferenzknoten transportieren.

5. Verfahren zur Interferenzmessung, wobei das Verfahren von einem Endgerät durchgeführt wird und folgendes umfasst:
Empfangen, von einer Basisstation, einer Informationsbenachrichtigung, darunter eine ganze Zahl M, wobei M die Anzahl aufeinanderfolgender Teilrahmen ist, die in einem bestimmten Interferenzmessungs-Teilrahmensatz enthalten sind und
über die das Endgerät eine Interferenzmessungsmittelwertbildung durchführen soll, um eine Kanalzustandsinformation, CSI, zu bestimmen, wobei der bestimmte Interferenzmessungs-Teilrahmensatz ein Satz von Teilrahmen ist, für die die Basisstation Nullleistungs-CSI-Referenzsignale einschließt, über die das Endgerät Interferenzmessungen durchführen soll,
Bestimmen, auf Basis der empfangenen Informationen, von M-Teilrahmen des Interferenzmessungs-Teilrahmensatzes und
Durchführen einer Interferenzmessung an jedem der M bestimmten Teilrahmen und
Berechnen eines durchschnittlichen Interferenzwertes der Interferenzmessung über die M bestimmten Teilrahmen; und
Bestimmen einer CSI gemäß dem durchschnittlichen Interferenzwert und Zurückführen der CSI zur Basisstation.

6. Verfahren nach Anspruch 5, wobei M in einer Hochschicht-Meldung oder in einer physikalischen Schicht-Meldung, die von der Basisstation signalisiert, aufgenommen wird.

7. Verfahren nach Anspruch 6, wobei die physikalische Signalisierung und eine Signalisierung zum Auslösen eines aperiodischen CSI-Berichts im gleichen Format eines im gleichen Format eines physikalischen Downlink-Steuerung-Kanals, PDCCH, transportiert und zusammen von der Basisstation empfangen werden.

8. Basisstation umfassend Mittel, die geeignet sind, das Verfahren nach einem der Ansprüche 1 bis 4 durchzuführen.

9. Endgerät umfassend Mittel, die geeignet sind, das Verfahren nach einem der Ansprüche 5 bis 7 durchzuführen.

10. Verfahren zur Rückmeldung von Kanalzustandsinformationen, CSI,
wobei das Verfahren von einem Endgerät durchgeführt wird und Folgendes umfasst:
Durchführen, nach Empfang von einem Auslöser für einen aperiodischen CSI-Bericht von einer Basisstation, von Interferenzmessungen an einem oder mehreren von der Basisstation spezifizierten Teilrahmen und Bestimmen einer Kanalzustandsinformation, CSI, gemäß den Messergebnissen und Rückführen der CSI an die Basisstation, wobei die Interferenzmessungen Messungen sind, die über Nullleistungs-CSI-Referenzsignale von der Basisstation durchgeführt werden, wobei die bestimmten Teilrahmen Teilrahmen sind, für die die Basisstation die Nullleistungs-CSI-Referenzsignale einschließt, wobei das Verfahren **dadurch gekennzeichnet ist, dass** das Endgerät über den einen oder die mehreren bestimmten Teilrahmen folgendermaßen informiert wird:
Empfangen, von der Basisstation, einer Teilrahmen-Offsetanzeige für jeden des einen oder der mehreren Teilrahmen und Bestimmen eines jeden der bestimmten Teilrahmen als Teilrahmen mit einer Teilrahmennummer entsprechend der Differenz zwischen einer Referenz-Teilrahmennummer einer Kanalmessung und einem Teilrahmen-Offset, der durch eine entsprechende der Teilrahmen-Offsetanzeigen angezeigt wird; wobei die Referenz-Teilrahmennummer einer Kanalmessung ein Teilrahmen ist, der einer Zeit entspricht, zu der der Auslöser gesendet wird; oder
Empfangen, von der Basisstation, einer Teilrahmen-Offsetanzeige für jeden des einen oder der mehreren Teilrahmen und einer Teilrahmen-Nummernanzeige, die dem einen oder den mehreren Teilrahmen gemeinsam ist, und Bestimmen eines jeden der bestimmten Teilrahmen als Teilrahmen mit einer Teilrahmennummer gemäß der Differenz zwischen einer Referenz-Teilrahmennummer, die durch die Teilrahmen-Nummernanzeige angezeigt wird, und einem Teilrahmen-Offset, der durch eine entsprechende der Teilrahmen-Offsetanzeigen angezeigt wird.

11. Verfahren nach Anspruch 10, ferner umfassend:
Empfangen der Teilrahmen-Offsetanzeigen oder der Teilrahmennummer und der Teilrahmen-Offsetanzeigen in einer Hochschicht-Signalisierung oder in einer physikalischen Schicht-Signalisierung von der Basisstation.

12. Verfahren nach Anspruch 11, wobei die physikalische Signalisierung und eine Signalisierung zum Auslösen des aperiodischen CSI-Berichts im gleichen Format eines physikalischen Downlink-Steuerung-Kanals, PDCCH, transportiert und zusammen von der Basisstation empfangen werden.

13. Endgerät umfassend Mittel, die geeignet sind, das Verfahren nach einem der Ansprüche 10 bis 12 durchzuführen.

## Revendications

1. Méthode de notification d'une signalisation de mesure d'interférence, dans laquelle la méthode est mise en oeuvre par une station de base et comprend les étapes consistant à :
notifier à un terminal des informations comprenant un nombre entier M, dans laquelle M est le nombre de sous-trames successives qui sont incluses dans un ensemble de sous-trames de mesure d'interférence spécifique et sur lesquelles le terminal doit effectuer un calcul de moyenne de mesure d'interférence afin de déterminer une information d'état de canal, CSI , dans laquelle l'ensemble de sous-trames de mesure d'interférence spécifique est un ensemble de sous-trames pour lesquelles la station de base comprend des signaux de référence CSI à puissance nulle sur lesquels le terminal doit effectuer des mesures d'interférence ;
et
recevoir du terminal une CSI pour la sous-trame de mesure d'interférence, la CSI résultant du calcul de moyenne de mesure d'interférence.

2. Méthode selon la revendication 1, dans laquelle l'étape de notification comprend :
le transport de M dans une signalisation de couche supérieure ou dans une signalisation de couche physique, et l'envoi de la signalisation au terminal.

3. Méthode selon la revendication 2, dans laquelle la signalisation de couche physique et une signalisation pour déclencher un rapport CSI apériodique sont acheminées dans le même format d'un canal de commande physique de liaison descendante, PDCCH, et sont envoyées ensemble au terminal.

4. Méthode selon la revendication 3, comprenant en outre :
l'ajustement d'un schéma de modulation et de codage courant pour de transmissions de données de la station de base au terminal, dans laquelle l'étape d'ajustement est effectuée en fonction de la CSI reçue du terminal et en fonction d'informations de planification relatives à une cellule d'interférence ou à un noeud d'interférence, les informations de planification étant le nombre de sous-trames portant des transmissions de données provenant de la cellule d'interférence ou du noeud d'interférence parmi les sous-trames utilisées par le terminal pour déterminer la CSI reçue.

5. Méthode de mesure d'interférence, la méthode étant mise en oeuvre par un terminal et comprenant les étapes consistant à :
recevoir, à partir d'une station de base, une notification d'informations comprenant un nombre entier M, dans laquelle M est le nombre de sous-trames successives qui sont incluses dans un ensemble de sous-trames de mesure d'interférence spécifique et sur lesquelles le terminal doit effectuer un calcul de moyenne de mesure d'interférence afin de déterminer une information d'état de canal, CSI, dans laquelle l'ensemble de sous-trames de mesure d'interférence spécifique est un ensemble de sous-trames pour lesquelles la station de base comprend des signaux de référence CSI à puissance nulle sur lesquels le terminal doit effectuer des mesures d'interférence
déterminer, sur la base des informations reçues, M sous-trames de l'ensemble de sous-trames de mesure d'interférence, et
effectuer une mesure d'interférence sur chacune des M sous-trames déterminées et calculer une valeur d'interférence moyenne de la mesure d'interférence sur les M sous-trames déterminées ; et
déterminer une CSI en fonction de la valeur d'interférence moyenne, et renvoyer la CSI à la station de base.

6. Méthode selon la revendication 5, dans laquelle le M est reçu dans une signalisation de couche supérieure ou dans une signalisation de couche physique provenant de la station de base.

7. Méthode selon la revendication 6, dans laquelle la signalisation physique et une signalisation permettant de déclencher un rapport de CSI apériodique sont acheminées dans le même format d'un canal de commande physique de liaison descendante, PDCCH, et sont reçues ensemble à partir de la station de base.

8. Station de base comprenant des moyens adaptés pour exécuter la méthode selon l'une quelconque des revendications 1 à 4.

9. Terminal comprenant des moyens adaptés pour exécuter la méthode selon l'une quelconque des revendications 5 à 7.

10. Méthode pour renvoyer des informations d'état de canal, dans lequel la méthode est exécuté par un terminal et comprend :
l'exécution, lors de la réception à partir d'une station de base d'un déclencheur pour un rapport de CSI apériodique, de mesures d'interférence sur une ou plusieurs sous-trames spécifiées par ladite station de base, et la détermination d'une information d'état de canal, CSI, en fonction des résultats de mesure, et le renvoi de la CSI à la station de base, dans laquelle les mesures d'interférence sont des mesures effectuées sur des signaux de référence CSI à puissance nulle depuis la station de base, dans laquelle les sous-trames spécifiées sont des sous-trames pour lesquelles la station de base comprend lesdits signaux de référence CSI à puissance nulle, ladite méthode étant **caractérisée en ce que** le terminal est informé des une ou plusieurs sous-trames spécifiées par :
réception, à partir de la station de base, d'une indication de décalage de sous-trame pour chacune des une ou plusieurs sous-trames, et la détermination de chacune des sous-trames spécifiées en tant que sous-trame avec un numéro de sous-trame en fonction de la différence entre un numéro de sous-trame de référence d'une mesure de canal et un décalage de sous-trame indiqué par une correspondante parmi les indications de décalage de sous-trame ; dans lequel le numéro de sous-trame de référence d'une mesure de canal est une sous-trame correspondant à un instant ou ledit déclencheur est transmis ; ou
réception, à partir de la station de base, d'une indication de décalage de sous-trame pour chacune des une ou plusieurs sous-trames et d'une indication de numéro de sous-trame commune aux une ou plusieurs sous-trames, et la détermination de chacune des sous-trames spécifiées comme étant la sous-trame avec un numéro de sous-trame en fonction de la différence entre un numéro de sous-trame de référence indiqué par l'indication de numéro de sous-trame et un décalage de sous-trame indiqué par une correspondante parmi les indications de décalage de sous-trame.

11. Méthode selon la revendication 10, comprenant en outre :
la réception des indications de décalage de sous-trame ou du numéro de sous-trame et des indications de décalage de sous-trame dans une signalisation de couche supérieure ou dans une signalisation de couche physique provenant de la station de base.

12. Méthode selon la revendication 11, dans laquelle la signalisation physique et une signalisation pour déclencher ledit rapport de CSI apériodique sont acheminées dans le même format d'un canal de commande physique de liaison descendante, PDCCH, et sont reçues ensemble à partir de la station de base.

13. Terminal comprenant des moyens adaptés pour exécuter la méthode selon l'une quelconque des revendications 10 à 12.
